(19) Europäisches Patentamt / European Patent Office / Office européen des brevets

(11) **EP 4 086 823 A1**

(12) **EUROPEAN PATENT APPLICATION**
published in accordance with Art. 153(4) EPC

(43) Date of publication:
**09.11.2022 Bulletin 2022/45**

(21) Application number: **21750635.1**

(22) Date of filing: **02.02.2021**

(51) International Patent Classification (IPC):
***G06N 20/00*** *(2019.01)*

(52) Cooperative Patent Classification (CPC):
**G06N 20/00**

(86) International application number:
**PCT/JP2021/003781**

(87) International publication number:
**WO 2021/157577 (12.08.2021 Gazette 2021/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.02.2020 JP 2020019844**

(71) Applicants:
• **Mitsubishi Heavy Industries, Ltd.
Tokyo 100-8332 (JP)**
• **Nagoya Institute Of Technology
Nagoya-shi, Aichi 466-8555 (JP)**

(72) Inventors:
• **MATSUNAMI, Natsuki
Tokyo 100-8332 (JP)**
• **ITO, Takayuki
Nagoya-shi, Aichi 466-8555 (JP)**
• **TANDA, Jin
Nagoya-shi, Aichi 466-8555 (JP)**

(74) Representative: **Hoffmann Eitle
Patent- und Rechtsanwälte PartmbB
Arabellastraße 30
81925 München (DE)**

(54) **LEARNING SYSTEM, LEARNING METHOD, AND LEARNING PROGRAM**

(57) A learning system for performing reinforcement learning of a cooperative action by agents includes the agents; and a reward granting unit configured to grant a reward. The reward granting unit performs a first step of, in the presence of a target agent to which the reward is to be granted, calculating an evaluation value relating to a cooperative action of other agents as a first evaluation value; a second step of, in the absence of the target agent, calculating an evaluation value relating to a cooperative action of the other agents as a second evaluation value; and a third step of calculating a difference between the first evaluation value and the second evaluation value as a penalty of the target agent and calculating the reward to be granted to the target agent based on the penalty. The target agent performs learning of the decision-making model based on the reward granted from the reward granting unit.

FIG.2

START

CALCULATION OF $\Delta \sum_{l \neq i} v_l(a_l, s_l)$ — S1

CALCULATION OF $\Delta \sum_{l \neq i} v_l(a_l, s^{-i}{}_l)$ — S2

CALCULATION OF $r$ — S3

END

EP 4 086 823 A1

**Description**

Field

The present disclosure relates to a learning system, a learning method, and a learning program for multi agents.

Background

In the field of multi-agent reinforcement learning, a device for appropriately distributing a reward to each agent is known (see, for example, Patent Literature 1). Based on the reward a target agent has obtained by using respective pieces of information given by information supply agents, the device estimates virtual revenue that might be obtained using the respective pieces of information from the information supply agents, and, based on the estimated virtual revenue, assesses the price of the information given by the information supply agents.

Citation List

Patent Literature

Patent Literature 1: Japanese Patent Application Laid-open No. 2019-19040

Summary

Technical Problem

In a multi-agent system, a cooperative action is performed by a plurality of agents. In multi-agent reinforcement learning, each agent performs learning to maximize its own reward. However, depending on the conditions of reward distribution to each agent, each agent may perform an action to maximize the own reward, which sometimes interferes with learning relating to cooperative action.

It is therefore an object of this disclosure to provide a learning system, a learning method, and a learning program capable of granting a reward that allows a cooperative action by a plurality of agents to be appropriately learned.

Solution to Problem

A learning system according to the present disclosure is for performing reinforcement learning of a cooperative action by a plurality of agents under a multi-agent system in which the plurality of agents perform the cooperative action. The learning system includes the plurality of agents; and a reward granting unit configured to grant a reward to the plurality of agents. Each of the agents includes a state acquisition unit configured to acquire a state of the agent; a reward acquisition unit configured to acquire the reward from the reward granting unit; a processing unit configured to select an action based on the state and the reward by using a decision-making model for selecting the action; and an execution unit configured to execute the action selected by the processing unit. The reward granting unit performs a first step of, in the presence of a target agent to which the reward is to be granted, calculating an evaluation value relating to a cooperative action of other agents as a first evaluation value; a second step of, in the absence of the target agent, calculating an evaluation value relating to a cooperative action of the other agents as a second evaluation value; and a third step of calculating a difference between the first evaluation value and the second evaluation value as a penalty of the target agent and calculating the reward to be granted to the target agent based on the penalty. The target agent performs learning of the decision-making model based on the reward granted from the reward granting unit.

Another learning system according to the present disclosure is for performing reinforcement learning of a cooperative action by a plurality of agents under a multi-agent system in which the plurality of agents perform the cooperative action. The learning system includes the plurality of agents; and a reward granting unit configured to grant a reward to the plurality of agents. Each of the agents includes a state acquisition unit configured to acquire a state of the agent; a reward acquisition unit configured to acquire the reward from the reward granting unit; a processing unit configured to select an action based on the state and the reward by using a decision-making model for selecting the action; and an execution unit configured to execute the action selected by the processing unit. The reward granting unit performs a fourth step of causing the plurality of agents to perform weighted voting relating to whether to perform a cooperative action; and a fifth step of, when a result of voting obtained in the absence of the target agent overturns a result of voting in the presence of the target agent, reducing a reward to be granted to the target agent by an amount of reward determined based on the result of voting in the absence of the target agent. The target agent performs learning of the decision-making model based on the reward granted from the reward granting unit.

A learning method for performing reinforcement learning of a cooperative action by a plurality of agents under a multi-agent system in which the plurality of agents perform the cooperative action. Each of the agents includes a state acquisition unit configured to acquire a state of the agent; a reward acquisition unit configured to acquire a reward from a reward granting unit configured to grant the reward; a processing unit configured to select an action based on the state and the reward by using a decision-making model for selecting the action; and an execution unit configured to execute the action selected by the processing unit. The learning method includes a first step of, in the presence of a target agent to which the reward is to be granted, calculating an evaluation value relating to a cooperative action of other agents as a first evaluation value; a second step of, in the absence of the target agent, calculating an evaluation value relating to a cooperative action of the other agents as a second evaluation value; a third step of calculating a difference between the first evaluation value and the second evaluation value as a penalty of the target agent and calculating the reward to be granted to the target agent based on the penalty; and a step of performing learning of the decision-making model of the target agent based on the reward granted from the reward granting unit.

Another learning method according to the present disclosure is for performing reinforcement learning of a cooperative action by a plurality of agents under a multi-agent system in which the plurality of agents perform the cooperative action. Each of the agents includes a state acquisition unit configured to acquire a state of the agent; a reward acquisition unit configured to acquire a reward from a reward granting unit configured to grant the reward; a processing unit configured to select an action based on the state and the reward by using a decision-making model for selecting the action; and an execution unit configured to execute the action selected by the processing unit. The learning method includes a fourth step of causing the plurality of agents to perform weighted voting relating to whether to perform a cooperative action; a fifth step of, when a result of voting obtained in the absence of the target agent overturns a result of voting in the presence of the target agent, reducing a reward to be granted to the target agent by an amount of reward determined based on the result of voting in the absence of the target agent; and a step of performing learning of the decision-making model of the target agent based on the reward granted from the reward granting unit.

A learning program according to the present disclosure is for performing reinforcement learning of a cooperative action by a plurality of agents under a multi-agent system in which the plurality of agents perform the cooperative action. Each of the agents includes a state acquisition unit configured to acquire a state of the agent; a reward acquisition unit configured to acquire a reward from a reward granting unit configured to grant the reward; a processing unit configured to select an action based on the state and the reward by using a decision-making model for selecting the action; and an execution unit configured to execute the action selected by the processing unit. The learning program causes the reward acquisition unit to perform: a first step of, in the presence of a target agent to which the reward is to be granted, calculating an evaluation value relating to a cooperative action of other agents as a first evaluation value; a second step of, in the absence of the target agent, calculating an evaluation value relating to a cooperative action of the other agents as a second evaluation value; and a third step of calculating a difference between the first evaluation value and the second evaluation value as a penalty of the target agent and calculating the reward to be granted to the target agent based on the penalty. The learning program causes the target agent to perform learning of the decision-making model of the target agent based on the reward granted from the reward granting unit.

Another learning program according to the present disclosure is for performing reinforcement learning of a cooperative action by a plurality of agents under a multi-agent system in which the plurality of agents perform the cooperative action. Each of the agents includes a state acquisition unit configured to acquire a state of the agent; a reward acquisition unit configured to acquire a reward from a reward granting unit configured to grant the reward; a processing unit configured to select an action based on the state and the reward by using a decision-making model for selecting the action; and an execution unit configured to execute the action selected by the processing unit. The learning program causes the reward acquisition unit to execute: a fourth step of causing the plurality of agents to perform weighted voting relating to whether to perform a cooperative action; and a fifth step of, when a result of voting obtained in the absence of the target agent overturns a result of voting in the presence of the target agent, reducing a reward to be granted to the target agent by an amount of reward determined based on the result of voting in the absence of the target agent. The learning program causes the target agent to perform learning of the decision-making model of the target agent based on the reward granted from the reward granting unit. Advantageous Effects of Invention

According to this disclosure, a reward allowing appropriate learning of a cooperative action by a plurality of agents can be granted.

Brief Description of Drawings

FIG. 1 is a drawing that schematically illustrates a learning system according to a first embodiment.
FIG. 2 is a flowchart relating to calculation of a reward by the learning system according to the first embodiment.
FIG. 3 is an illustrative drawing relating to learning of the learning system according to the first embodiment.

FIG. 4 is a flowchart that illustrates a learning method according to the first embodiment.

FIG. 5 is an illustrative drawing relating to learning of a learning system according to a second embodiment. Description of Embodiments

Embodiments according to the present invention will now be described in detail with reference to the drawings. It should be noted that the embodiments are not intended to limit this invention. The components of the embodiments include those that could be easily replaced by the skilled person or those that are substantially the same. The components described below can be combined as appropriate. In the case of having a plurality of embodiments, the embodiments are allowed to be combined with one another.

First Embodiment

A learning system 1 according to a first embodiment is a system that performs reinforcement learning of a plurality of agents 5, namely, multi-agents, that performs a cooperative action. Examples of the agent 5 may include a moving body, such as a vehicle, ship, and aircraft.

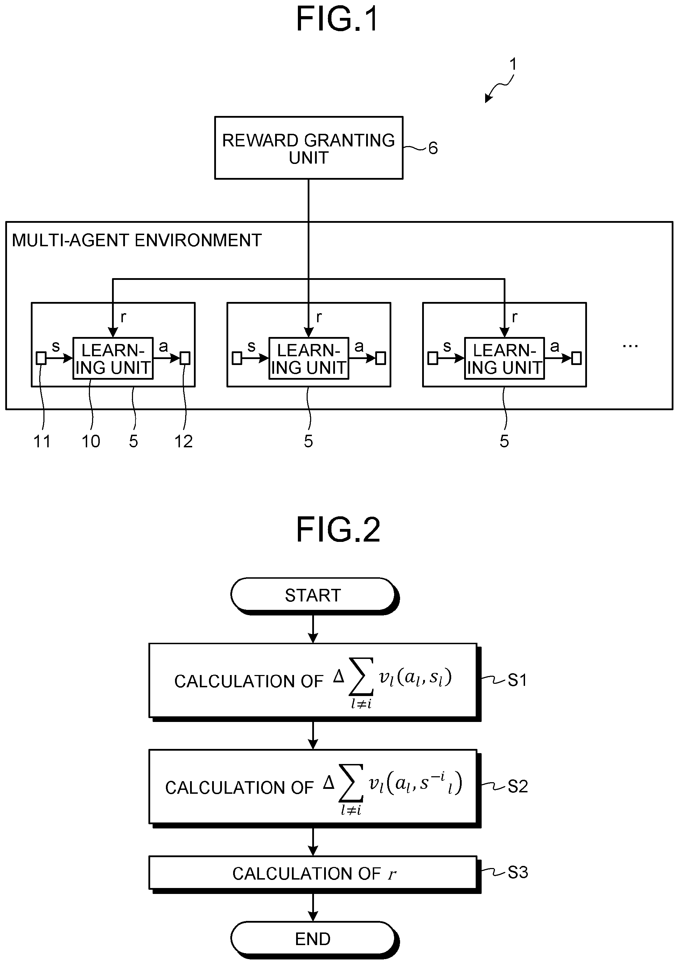

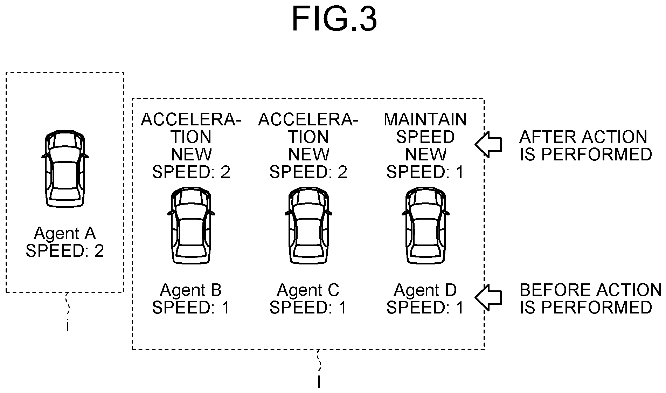

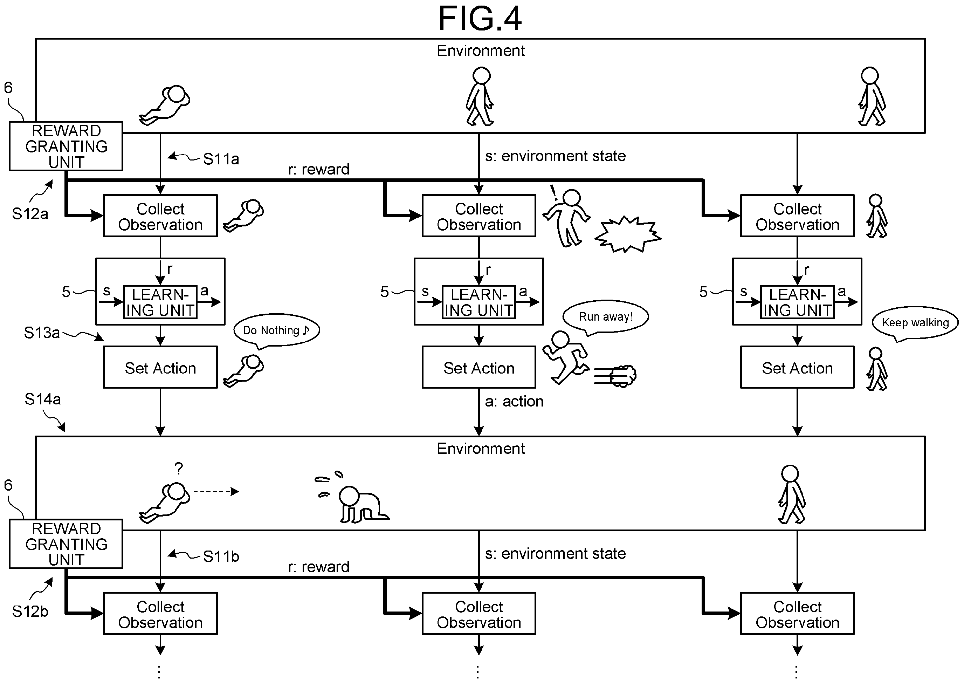

FIG. 1 is a drawing that schematically illustrates a learning system according to the first embodiment. FIG. 2 is a flowchart relating to calculation of a reward by the learning system according to the first embodiment. FIG. 3 is an illustrative drawing relating to learning of the learning system according to the first embodiment. FIG. 4 is a flowchart that illustrates a learning method according to the first embodiment.

Learning System

The learning system 1 is implemented by, for example, a computer, and performs reinforcement learning of the agents 5 in a multi-agent environment (Environment), existing as a virtual space. As illustrated in FIG. 1, the learning system 1 has the agents 5 and a reward granting unit 6 that grants a reward to the agents 5. The agents 5 and the reward granting unit 6 operate on a computer. In the learning system 1, each agent 5 performs reward-based learning with the reward granting unit 6 granting a reward to the agent 5. More specifically, the agent 5 performs learning so as to maximize the reward.

Agent

The agents 5 are set in the multi-agent environment (Environment). The agent 5 has a learning unit (processing unit, reward acquisition unit) 10, a sensor 11, and an execution unit 12. The sensor 11 functions as a state acquisition unit to acquire the state of the agent 5. The sensor 11 is connected to the learning unit 10 and outputs the acquired state to the learning unit 10. Examples of the sensor 11 include a speed sensor, an acceleration sensor, and the like. The learning unit 10 functions as a reward acquisition unit that acquires a reward input from the reward granting unit 6. The learning unit 10 also receives a state from the sensor 11. The learning unit 10 functions as a processing unit that selects an action based on the state and the reward using a decision-making model. Moreover, the learning unit 10 performs learning of the decision-making model so that the reward is optimized in reinforcement learning. The learning unit 10 is connected to the execution unit 12, and outputs the action selected using the decision-making model to the execution unit 12. The execution unit 12 executes the action input from the learning unit 10. Examples of the execution unit 12 include an actuator.

The agent 5 acquires the state and the reward during reinforcement learning and then selects an action from the decision-making model based on the acquired state and reward at the learning unit 10. Then, the agent 5 executes the selected action. The decision-making model (learning unit 10) of the agent 5 is mounted on a real mobile body after accomplishment of reinforcement learning, thereby implementing the cooperative action.

Reward granting unit

The reward granting unit 6 calculates the reward to be granted to the agent 5 based on the multi-agent environment and grants the calculated reward to the agent 5. The reward granting unit 6 calculates the reward, based on evaluation made in the presence of the target agent 5 to which the reward is to be granted and on evaluation made in the absence of the target agent 5. Specifically, the reward granting unit 6 calculates the reward based on the following Equation (1).

$$r = a + \Delta \sum_{l \neq i} v_l(a_l, s_l) - \Delta \sum_{l \neq i} v_l\left(a_l, s^{-i}{}_l\right) \tag{1}$$

*r*: *reward function*
*a*: *conventional reward*
$v_l$: *agent l's value when it is observing environment state s and took action a*
$s_l$: *environment state that agent l is observing,*
$s^{-i}$ *represents state without agent i*
$a_l$: *agent l's action*

In this equation, i represents the target agent, while l represents other agents. The reward (reward function) is given as r, while a conventional reward is given as $\alpha$. Moreover, $v_1$ represents an evaluation value (the agent l's value), $s_1$ is the state of the agent l, $s^{-i}$ is the state of the agent 1 excluding the target agent i, and $a_1$ is the agent l's action.

In Equation (1), the second term in the right side gives an evaluation value (a first evaluation value) relating to a cooperative action of the other agents 1 performed in the presence of the target agent i. Specifically, the first evaluation value represents the amount of increase calculated by subtracting the sum of the evaluation values for a cooperative action before the other agents 1 perform actions in the presence of the target agent i from the sum of the evaluation values for the cooperative action after the other agents 1 perform the actions in the presence of the target agent i.

In Equation (1), the third term in the right side gives an evaluation value (a second evaluation value) for a cooperative action performed by other agents 1 in the absence of the target agent i. Specifically, the second evaluation value represents the amount of increase calculated by subtracting the sum of the evaluation values for a cooperative action before the other agents 1 perform actions in the absence of the target agent i from the sum of the evaluation values for the cooperative action after the other agents 1 perform the actions in the absence of the target agent i.

In Equation (1), the value given by subtracting the third term from the second term of the right side, in other words, the difference between the first and the second evaluation values, represents a penalty. The reward to be granted to the target agent i is calculated including this penalty.

Referring to FIG. 3, the second and the third terms of the right side in Equation (1), or the penalty, will be explained.

In the second term of the right side in Equation (1), the agents 5 are, for example, Agents A to D illustrated in FIG. 3. In this example, Agent A is the target agent i while Agents B to D are the other agents 1. A cooperative action is, for example, an action in which Agents A to D move side-by-side at the same speed. In this case, the speed as the state of the target agent i is "2", while the speed as the state of the other agents 1 is "1". In this case, example actions selected by the decision-making model for Agents B to D, namely, the other agents 1, for a cooperative action are that Agent B and Agent C increase the speed to "2" with Agent D maintaining the speed at "1".

Of the evaluation values obtained after completion of the actions by the other agents 1 in the presence of the target agent i, the maximum evaluation value is the largest speed "2" while the minimum evaluation value is the smallest speed "1". On the other hand, of the evaluation values obtained before the other agents 1 perform actions in the presence of the target agent i, the maximum evaluation value is the largest speed "1" while the minimum evaluation value is the smallest speed "1". The amount of increase as the first evaluation value given by the second term in the right side is therefore "- {(2 - 1) - (1 - 1)} = -1".

Concerning the third term in the right side of Equation (1), since the other agents 1 are moving side-by-side at the same speed in the absence of the target agent i, the actions selected by the decision-making model are such that Agents B to D as the other agents 1 maintain the speed at "1".

In this case, of the evaluation values obtained after completion of the actions by the other agents 1 in the absence of the target agent i, the maximum evaluation value is the largest speed "1" while the minimum evaluation value is the smallest speed "1". Likewise, of the evaluation values obtained before the other agents 1 perform the actions in the absence of the target agent i, the maximum evaluation value is the largest speed "1" while the minimum evaluation value is the smallest speed "1". The amount of increase as the second evaluation value given by the third term in the right side is therefore "- {(1 - 1) - (1 - 1)} = 0".

The penalty given by subtracting the second evaluation value from the first evaluation value is "-1 - 0 = -1". The reward of the target agent i is thus "r = $\alpha$ - 1" by assigning the penalty "-1".

Calculation of a reward granted by the reward granting unit 6 will be explained with reference to FIG. 2. In calculation of a reward based on Equation (1), the reward granting unit 6 calculates the first evaluation value using the second term in the right side of Equation (1) (Step S1: a first step). The reward granting unit 6 then calculates the second evaluation value using the third term in the right side of Equation (1) (Step S2: a second step). The reward granting unit 6 then calculates a reward from Equation (1), assigning the preset conventional reward $\alpha$, the first evaluation value, and the second evaluation value (Step S3: a third step).

Next, reinforcement learning by the agents 5 based on the reward calculated by the reward granting unit 6 will now be explained with reference to FIG. 4. As illustrated in FIG. 4, the learning system 1 acquires the state of each agent 5 present in the multi-agent environment from the sensor 11 of the agent 5 (step S11a). The learning system 1 also acquires the reward calculated by the method of calculation in FIG. 2 from the reward granting unit 6 (Step S12a). In other words, the learning system 1 collects observation information that includes the state and reward (collect Observation).

In the learning system 1, based on the acquired state and reward, each agent 5 selects an action using the decision-making model and performs the action (Step S13a). This process updates the multi-agent environment after completion of the actions (Step S14a).

By repeating the processing of Step S11 to Step S14, the learning system 1 is optimized so that the decision-making model of each agent 5 selects an action that maximizes the reward. In this manner, the learning system 1 performs reinforcement learning of the agents 5 by executing a learning program to perform the steps of FIG. 2 and FIG. 4.

Second Embodiment

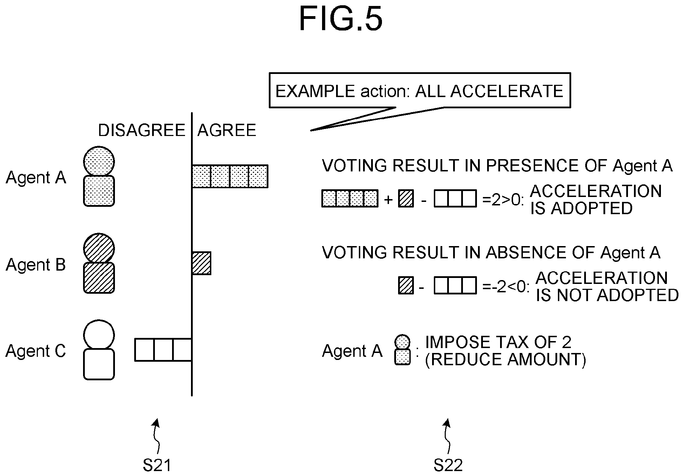

The learning system 1 of a second embodiment will now be described with reference to FIG. 5. In the second embodiment, parts different from the first embodiment will be described so as to avoid repeated description. Other parts having the same configuration as that of the first embodiment will be indicated by the same reference numerals. FIG. 5 is an illustrative drawing relating to learning of the learning system of the second embodiment.

The learning system 1 of the second embodiment imposes a tax, instead of applying the penalty that is used by the reward granting unit 6 of the first embodiment for calculation of the reward. As illustrated in FIG. 5, Agents A to C are set as the agents 5. Agent A is the target agent i while Agents B and C are the other agents 1. For example, the cooperative action of this case is acceleration by all Agents A to C.

In calculation of the reward, the reward granting unit 6 causes the agents 5 to perform weighted voting to determine whether to perform the cooperative action (Step S21: a fourth step). As illustrated in FIG. 5, the weighted voting is voting to agree or disagree with execution of the cooperative action, and weight is imposed on the opinions of agree and disagree. For example, Agent A agrees, and the weight is "4". Agent B agrees, and the weight is "1". Agent C disagrees, and the weight is "3".

After completion of Step S21, if the result of voting obtained in the absence of the target agent i overturns the result of voting in the presence of the target agent i, the reward granting unit 6 reduces the reward to be granted to the target agent i by the amount of reward determined based on the result of voting in the absence of the target agent i (Step S22: a fifth step). More specifically, at Step S22, the voting result in the presence of Agent A as the target agent i is "2", which means that acceleration has been adopted. On the other hand, the voting result "2" in the absence of Agent A as the target agent i means that acceleration has not been adopted. In this case, since the voting result is overturned, the reward granting unit 6 reduces the reward by the amount of reward determined based on the voting result "-2". In other words, the reward granting unit 6 imposes a tax of "2" on the reward, whereby the reward is given as "r = $\alpha$ - 2". In this manner, the learning system 1 performs reinforcement learning of the agents 5 by executing a learning program to perform the steps of FIG. 5.

In the second embodiment, although tax is used instead of the penalty of the first embodiment, both the penalty and the tax may be used for calculation of the reward. In other words, the reward may be calculated using a combination of the first and the second embodiments.

As described above, the learning system 1, the learning method, and the learning program of the embodiments are comprehended as below.

A learning system 1 according to a first aspect is a learning system to carry out reinforcement learning of a cooperative action by a plurality of agents 5 in a multi-agent system that coordinates cooperative action of the agents 5. The system includes the agents 5 and a reward granting unit 6 to grant a reward to the agents 5. Each of the agents 5 includes a state acquisition unit (sensor) 11 that acquires the state of the agent 5, a reward acquisition unit (learning unit) 10 that acquires the reward from the reward granting unit 6, a processing unit (learning unit) 10 that selects an action based on the state and the reward using a decision-making model for selecting the action, and an execution unit 12 that executes the action selected by the processing unit 10. The reward granting unit 6 performs a first step (Step S1) of, in the presence of a target agent i to which the reward is to be granted, calculating an evaluation value relating to the cooperative action of other agents 1 as a first evaluation value, a second step (Step S2) of, in the absence of the target agent i, calculating an evaluation value relating to the cooperative action of the other agents 1 as a second evaluation value, and a third step (Step S3) of calculating the difference between the first evaluation value and the second evaluation value as a penalty of the target agent i and then calculating the reward to be granted to the target agent i based on the penalty. The target agent i performs learning of the decision-making model based on the reward granted by the reward granting unit 6.

A learning method according to a sixth aspect is a method of learning to carry out reinforcement learning of a cooperative action by a plurality of agents 5 in a multi-agent system that coordinates the cooperative action of the agents 5. Each of the agents 5 includes a state acquisition unit (sensor) 11 that acquires the state of the agent 5, a reward acquisition unit (learning unit) 10 that acquires the reward from the reward granting unit 6, a processing unit (learning unit) 10 that selects an action based on the state and the reward using a decision-making model for selecting the action, and an execution unit 12 that executes the action selected by the processing unit 10. The method includes a first step (Step S1) to calculate an evaluation value relating to a cooperative action of other agents 1 in the presence of a target agent i configured to receive the reward as a first evaluation value, a second step (Step S2) to calculate an evaluation value relating to the cooperative action of the other agents 1 in the absence of the target agent i as a second evaluation value, and a third step (Step S3) to calculate the difference between the first evaluation value and the second evaluation value as a penalty of the target agent i and then calculate the reward to be granted to the target agent i based on the penalty, and a step (Step S13) to carry out learning of the decision-making model of the target agent i based on the reward granted by the reward granting unit 6.

A learning program according to an eighth aspect is a learning program to carry out reinforcement learning of a cooperative action by a plurality of agents 5 in a multi-agent system that coordinates the cooperative action of the agents 5. Each of the agents 5 includes a state acquisition unit (sensor) 11 that acquires the state of the agent 5, a reward acquisition unit (learning unit) 10 that acquires the reward from the reward granting unit 6, a processing unit (learning unit) 10 that selects an action based on the state and the reward using a decision-making model for selecting the action, and an execution unit 12 that executes the action selected by the processing unit 10. The program causes the reward granting unit 6 that grants a reward to the agents 5 to execute a first step (Step S1) to calculate an evaluation value relating to the cooperative action of other agents 1 in the presence of a target agent i configured to receive the reward as a first evaluation value, a second step (Step S2) to calculate an evaluation value relating to the cooperative action of the other agents 1 in the absence of the target agent i as a second evaluation value, and a third step (Step S3) to calculate the difference between the first evaluation value and the second evaluation value as a penalty of the target agent i and then calculate the reward to be granted to the target agent i based on the penalty, and causes the target agent i to carry out learning of the decision-making model of the target agent i based on the reward granted from the reward granting unit 6.

This configuration enables the reward granting unit 6 to calculate the reward based on the fee of nuisance given to the other agents 1 by the target agent i. This configuration therefore prevents such an action that increases the reward of only the target agent i when the agents 5 perform a cooperative action, thereby granting a reward allowing appropriate learning of a multi-agents' cooperative action.

According to a second aspect, the first evaluation value corresponds to the amount of increase (the second term in the right side of Equation (1)) given by subtracting the sum of evaluation values relating to the cooperative action before the other agents 1 perform actions in the presence of the target agent i from the sum of evaluation values relating to the cooperative action after the other agents 1 perform the actions in the presence of the target agent i, and the second evaluation value corresponds to the amount of increase (the third term in the right side of Equation (1)) given by subtracting the sum of evaluation values relating to the cooperative action before the other agents 1 perform actions in the absence of the target agent i from the sum of evaluation values relating to the cooperative action after the other agents 1 perform the actions in the absence of the target agent i.

This configuration allows calculation of the penalty based on the amount of increase obtained by comparing values before and after the action of the agents 5. This therefore enables calculation of the penalty based on a change over time in the multi-agent environment.

According to a third aspect, the reward granting unit 6 performs a fourth step (Step S21) of causing the agents 5 to perform weighted voting relating to whether to perform the cooperative action, and a fifth step (Step S22) of, when the result of voting obtained in the absence of the target agent i overturns the result of voting in the presence of the target agent i, reducing the reward (taxation) to be granted to the target agent i by the amount of reward determined based on the result of voting in the absence of the target agent i.

This configuration allows the reward granting unit 6 to calculate a reward including a tax determined depending on the magnitude of the impact given to the other agents 1 by the target agent i. This configuration therefore allows the target agent i to perform an action while taking tax into consideration when the agents 5 perform a cooperative action, thereby granting a reward allowing appropriate learning of a multi-agents' cooperative action.

A learning system 1 according to a fourth aspect is a learning system to carry out reinforcement learning of a cooperative action by a plurality of agents 5 in a multi-agent system that coordinates a cooperative action of the agents 5. The learning system 1 includes the agents 5 and a reward granting unit 6 to grant a reward to the agents 5. Each of the agents 5 includes a state acquisition unit (sensor) 11 that acquires the state of the agent 5, a reward acquisition unit (learning unit) 10 that acquires the reward from the reward granting unit 6, a processing unit (learning unit) 10 that selects an action based on the state and the reward using a decision-making model for selecting the action, and an execution unit 12 that executes the action selected by the processing unit 10. The reward granting unit 6 performs a fourth step (Step S21) to cause the agents 5 to perform weighted voting relating to whether to perform a cooperative action, and a fifth step (Step S22) to, if the result of voting obtained in the absence of the target agent i overturns the result of voting in the presence of the target agent i, reduce the reward (taxation) to be granted to the target agent i by the amount of reward determined based on the result of voting in the absence of the target agent i. The target agent i performs learning of the decision-making model based on the reward granted from the reward granting unit 6.

A learning method according to a seventh aspect is a learning method to carry out reinforcement learning of a cooperative action by a plurality of agents 5 in a multi-agent system that coordinates the cooperative action of the agents 5. Each of the agents 5 includes a state acquisition unit (sensor) 11 that acquires the state of the agent 5, a reward acquisition unit (learning unit) 10 that acquires the reward from the reward granting unit 6, a processing unit (learning unit) 10 that selects an action based on the state and the reward using a decision-making model for selecting the action, and an execution unit 12 that executes the action selected by the processing unit 10. The method includes a fourth step (Step S21) to cause the agents 5 to perform weighted voting relating to whether to perform a cooperative action, and a fifth step (Step S22) to, if the result of voting obtained in the absence of the target agent i overturns the result of voting in the presence of the target agent i, reduce the reward (taxation) to be granted to the target agent i by the amount of reward determined based on the result of voting in the absence of the target agent i, and a step (Step S13) to carry out learning of the decision-making model of the target agent i based on the reward granted from the reward granting unit 6.

A learning program according to a ninth aspect is a learning program to carry out reinforcement learning of a cooperative action by a plurality of agents 5 in a multi-agent system that coordinates the cooperative action of the agents 5. Each of the agents 5 includes a state acquisition unit (sensor) 11 that acquires the state of the agent 5, a reward acquisition unit (learning unit) 10 that acquires the reward from the reward granting unit 6, a processing unit (learning unit) 10 that selects an action based on the state and the reward using a decision-making model that selects the action, and the execution unit 12 that executes the action selected by the processing unit 10. The program causes the reward granting unit 6 that grants a reward to the agents 5 to perform a fourth step (Step S21) to make the agents 5 perform weighted voting relating to whether to perform a cooperative action, and a fifth step (Step S22) to, if the result of voting obtained in the absence of the target agent i overturns the result of voting in the presence of the target agent i, reduce the reward (taxation) to be granted to the target agent i by the amount of reward determined based on the result of voting in the absence of the target agent i, and causes the target agent i to carry out learning of the decision-making model of the target agent i based on the reward granted from the reward granting unit 6.

According to the above configurations, the reward granting unit 6 can calculate a reward that includes a tax determined depending on the impact given by the target agent i to the other agents 1. These configurations therefore allow the target agent i to perform an action while taking tax into consideration when the agents 5 perform a cooperative action, thereby granting a reward allowing appropriate learning of a multi-agents' cooperative action.

As a fifth aspect, the agent is a mobile body.

This configuration allows a reward to be granted such that a cooperative action by the mobile bodies can be appropriately learned.

Reference Signs List

1  Learning System
5  Agent
6  Reward Granting Unit
10  Learning Unit
11  Sensor
12  Execution Unit

**Claims**

1. A learning system for performing reinforcement learning of a cooperative action by a plurality of agents under a multi-agent system in which the plurality of agents perform the cooperative action, the learning system comprising:

   the plurality of agents; and
   a reward granting unit configured to grant a reward to the plurality of agents, wherein
   each of the agents includes

     a state acquisition unit configured to acquire a state of the agent;
     a reward acquisition unit configured to acquire the reward from the reward granting unit;

a processing unit configured to select an action based on the state and the reward by using a decision-making model for selecting the action; and

an execution unit configured to execute the action selected by the processing unit,

the reward granting unit performs

a first step of, in the presence of a target agent to which the reward is to be granted, calculating an evaluation value relating to a cooperative action of other agents as a first evaluation value;

a second step of, in the absence of the target agent, calculating an evaluation value relating to a cooperative action of the other agents as a second evaluation value; and

a third step of calculating a difference between the first evaluation value and the second evaluation value as a penalty of the target agent and calculating the reward to be granted to the target agent based on the penalty, and

the target agent performs learning of the decision-making model based on the reward granted from the reward granting unit.

2. The learning system according to claim 1, wherein

the first evaluation value corresponds to an amount of increase given by subtracting the sum of evaluation values relating to a cooperative action before the other agents perform an action in the presence of the target agent from the sum of evaluation values relating to a cooperative action after the other agents perform the action in the presence of the target agent, and

the second evaluation value corresponds to an amount of increase given by subtracting the sum of evaluation values relating to a cooperative action before the other agents perform actions in the absence of the target agent from the sum of evaluation values relating to a cooperative action after the other agents perform the actions in the absence of the target agent.

3. The learning system according to claim 1 or 2, wherein
the reward granting unit performs:

a fourth step of causing the plurality of agents to perform weighted voting relating to whether to perform a cooperative action; and

a fifth step of, when a result of voting obtained in the absence of the target agent overturns a result of voting in the presence of the target agent, reducing a reward to be granted to the target agent by an amount of reward determined based on the result of voting in the absence of the target agent.

4. A learning system for performing reinforcement learning of a cooperative action by a plurality of agents under a multi-agent system in which the plurality of agents perform the cooperative action, the learning system comprising:

the plurality of agents; and
a reward granting unit configured to grant a reward to the plurality of agents, wherein
each of the agents includes

a state acquisition unit configured to acquire a state of the agent;
a reward acquisition unit configured to acquire the reward from the reward granting unit;
a processing unit configured to select an action based on the state and the reward by using a decision-making model for selecting the action; and
an execution unit configured to execute the action selected by the processing unit,

the reward granting unit performs

a fourth step of causing the plurality of agents to perform weighted voting relating to whether to perform a cooperative action; and

a fifth step of, when a result of voting obtained in the absence of the target agent overturns a result of voting in the presence of the target agent, reducing a reward to be granted to the target agent by an amount of reward determined based on the result of voting in the absence of the target agent, and

the target agent performs learning of the decision-making model based on the reward granted from the reward granting unit.

5. The learning system according to any one of claims 1 to 4, wherein the agent is a mobile body.

6. A learning method for performing reinforcement learning of a cooperative action by a plurality of agents under a multi-agent system in which the plurality of agents perform the cooperative action,

each of the agents including

a state acquisition unit configured to acquire a state of the agent;
a reward acquisition unit configured to acquire a reward from a reward granting unit configured to grant the reward;
a processing unit configured to select an action based on the state and the reward by using a decision-making model for selecting the action; and
an execution unit configured to execute the action selected by the processing unit,

the learning method comprising:

a first step of, in the presence of a target agent to which the reward is to be granted, calculating an evaluation value relating to a cooperative action of other agents as a first evaluation value;
a second step of, in the absence of the target agent, calculating an evaluation value relating to a cooperative action of the other agents as a second evaluation value;
a third step of calculating a difference between the first evaluation value and the second evaluation value as a penalty of the target agent and calculating the reward to be granted to the target agent based on the penalty; and
a step of performing learning of the decision-making model of the target agent based on the reward granted from the reward granting unit.

7. A learning method for performing reinforcement learning of a cooperative action by a plurality of agents under a multi-agent system in which the plurality of agents perform the cooperative action,

each of the agents including

a state acquisition unit configured to acquire a state of the agent;
a reward acquisition unit configured to acquire a reward from a reward granting unit configured to grant the reward;
a processing unit configured to select an action based on the state and the reward by using a decision-making model for selecting the action; and
an execution unit configured to execute the action selected by the processing unit,

the learning method comprising:

a fourth step of causing the plurality of agents to perform weighted voting relating to whether to perform a cooperative action;
a fifth step of, when a result of voting obtained in the absence of the target agent overturns a result of voting in the presence of the target agent, reducing a reward to be granted to the target agent by an amount of reward determined based on the result of voting in the absence of the target agent; and
a step of performing learning of the decision-making model of the target agent based on the reward granted from the reward granting unit.

8. A learning program for performing reinforcement learning of a cooperative action by a plurality of agents under a multi-agent system in which the plurality of agents perform the cooperative action,

each of the agents including

a state acquisition unit configured to acquire a state of the agent;
a reward acquisition unit configured to acquire a reward from a reward granting unit configured to grant the reward;
a processing unit configured to select an action based on the state and the reward by using a decision-making model for selecting the action; and
an execution unit configured to execute the action selected by the processing unit,

the learning program causing the reward acquisition unit to perform:

a first step of, in the presence of a target agent to which the reward is to be granted, calculating an evaluation value relating to a cooperative action of other agents as a first evaluation value;
a second step of, in the absence of the target agent, calculating an evaluation value relating to a cooperative action of the other agents as a second evaluation value; and
a third step of calculating a difference between the first evaluation value and the second evaluation value as a penalty of the target agent and calculating the reward to be granted to the target agent based on the penalty, and

the learning program causing the target agent to perform learning of the decision-making model of the target agent based on the reward granted from the reward granting unit.

9. A learning program for performing reinforcement learning of a cooperative action by a plurality of agents under a multi-agent system in which the plurality of agents perform the cooperative action,

each of the agents including

a state acquisition unit configured to acquire a state of the agent;
a reward acquisition unit configured to acquire a reward from a reward granting unit configured to grant the reward;
a processing unit configured to select an action based on the state and the reward by using a decision-making model for selecting the action; and
an execution unit configured to execute the action selected by the processing unit,

the learning program causing the reward acquisition unit to execute:

a fourth step of causing the plurality of agents to perform weighted voting relating to whether to perform a cooperative action; and
a fifth step of, when a result of voting obtained in the absence of the target agent overturns a result of voting in the presence of the target agent, reducing a reward to be granted to the target agent by an amount of reward determined based on the result of voting in the absence of the target agent, and

the learning program causing the target agent to perform learning of the decision-making model of the target agent based on the reward granted from the reward granting unit.

# FIG.1

REWARD GRANTING UNIT ~6

MULTI-AGENT ENVIRONMENT

LEARN-ING UNIT

LEARN-ING UNIT

LEARN-ING UNIT

...

11  10  5  12          5          5

# FIG.2

START

CALCULATION OF $\Delta \sum_{l \neq i} v_l(a_l, s_l)$ ~S1

CALCULATION OF $\Delta \sum_{l \neq i} v_l(a_l, s^{-i}{}_l)$ ~S2

CALCULATION OF $r$ ~S3

END

# FIG.3

Agent A
SPEED: 2

i

ACCELERA-TION
NEW
SPEED: 2

ACCELERA-TION
NEW
SPEED: 2

MAINTAIN
SPEED
NEW
SPEED: 1

AFTER ACTION
IS PERFORMED

Agent B
SPEED: 1

Agent C
SPEED: 1

Agent D
SPEED: 1

BEFORE ACTION
IS PERFORMED

i

FIG.4

# FIG.5

EXAMPLE action: ALL ACCELERATE

DISAGREE | AGREE

Agent A

Agent B

Agent C

VOTING RESULT IN PRESENCE OF Agent A

⬛⬛⬛⬛ + ▨ - ☐☐☐ =2>0: ACCELERATION IS ADOPTED

VOTING RESULT IN ABSENCE OF Agent A

▨ - ☐☐☐ =-2<0: ACCELERATION IS NOT ADOPTED

Agent A : IMPOSE TAX OF 2 (REDUCE AMOUNT)

S21

S22

## INTERNATIONAL SEARCH REPORT

| International application No. |
|---|
| PCT/JP2021/003781 |

**A. CLASSIFICATION OF SUBJECT MATTER**
G06N 20/00(2019.01)i
FI: G06N20/00

According to International Patent Classification (IPC) or to both national classification and IPC

**B. FIELDS SEARCHED**

Minimum documentation searched (classification system followed by classification symbols)
G06N G06N3/00-99/003/00-99/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | 保知良暢、外 3 名，外部評価機構を導入したマルチエージェント強化学習における過去の事象に基づく報酬配分，電子情報通信学会論文誌(J87-D-1), 01 December 2004, no. 12, pp. 1119-1127, entire text, (BOCHI, Yoshinobu et al., "Reward Sharing Based on Past Events in Multiagent Reinforcement Learning Using an External Evaluator", Proceedings of IEICE (J87-D-1)) | 1-9 |
| A | 柴田克成、外 2 名，強化学習による個性・社会性の発現・分化モデル，計測自動制御学会論文集，31 May 2003, vol. 39, no. 5, pp.494-502, in particular, "3. Classification of conflicts of interest", (SHIBATA, Katsunari et al., "Emergence and Differentiation Model of Individuality and Sociality by Reinforcement Learning", Transactions of the Society of Instrument and Control Engineers) | 1-9 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 April 2021 (14.04.2021) | 27 April 2021 (27.04.2021) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019019040 A